# EUROPEAN PATENT APPLICATION

(11) **EP 4 648 474 A1**
(43) Date of publication of application: **12.11.2025**
(21) Application number: 25174004.9
(22) Date of filing: 02.05.2025
(51) Int. Cl.: H04W 28/18, H04W 84/12

(54) **SYSTEM AND METHOD FOR PERFORMING OPERATION MODE REQUEST IN WIRELESS LOCAL AREA NETWORK**

(30) Priority: 06.05.2024 US 202463643180 P; 28.10.2024 US 202463712833 P; 30.04.2025 US 202519195080
(71) Applicant: Samsung Electronics Co., Ltd., Suwon-si, Gyeonggi-do 16677 (KR)
(72) Inventor: MA, Yongsen, San Jose, CA, 95134 (US); KOUNDOURAKIS, Michail, Cambridge, CB4 0AE (GB); RISON, Mark Gorthorn, Cambridge, CB4 0AE (GB); KANDALA, Srinivas, San Jose, CA, 95134 (US); GIDVANI, Ravi, San Jose, CA, 95134 (US)
(74) Representative: Kuhnen & Wacker Patent- und Rechtsanwaltsbüro PartG mbB

(57) **Abstract**

A first device, a second device, a system and a method are disclosed for performing operating mode changes in a wireless system. A method performed by the first device includes transmitting (401), to the second device, an operating mode request, OMR, indicating a requested operation mode change by the second device and an expected start time; receiving (402), from the second device, a response to the OMR; and transmitting or receiving (406) data, to or from the second device, based on the response to the OMR. A corresponding method performed by the second device is also disclosed.

## Description

### TECHNICAL FIELD

The disclosure generally relates to operating mode changes in a wireless local area network (WLAN) system. More particularly, the subject matter disclosed herein relates to improvements in a WLAN system by allowing an initiating station (STA) to request a responding STA to change the responding STA's operating mode and/or parameters.

### SUMMARY

In a WLAN system, an STA or an access point (AP) may change its operating mode, e.g., change its bandwidth (BW), number of spatial streams (NSS), other settings/fields/elements, etc., and then notify other STAs of the changes by different mechanisms, such as an operating mode notification (OMN) or an operating mode indication (OMI). However, these mechanisms are used for notification/indication purposes and not for a request or negotiation of a certain operating mode among STAs.

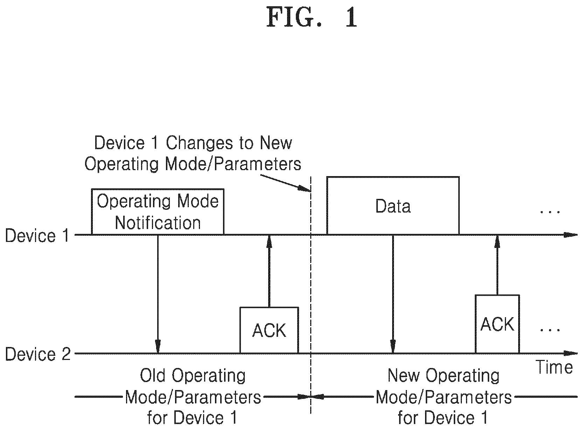

FIG. 1 illustrates an example of a first device transmitting an OMN to a second device.

Referring to FIG. 1, Device 1, e.g., an STA operating in a first operating mode, upon determining a need to change its operating mode, transmits an OMN to Device 2, which then transmits an ACK to acknowledge the received OMN. Thereafter, Device 1 changes from the first operating mode to a second (new) operating mode and transmits data to Device 2 in accordance with the first operating mode.

As illustrated in FIG. 1, Device 1 merely notifies Device 2, via an OMN, that Device 1 is changing its operating mode.

A future WLAN system may include a new requirement that a first STA, i.e., an initiating STA, be able to request a second STA, i.e., a responding STA, to change the second STA's operating mode/parameters or to enable/disable/update certain functions of the second STA.

To meet this new requirement, systems and methods are described herein for providing an operating mode request (OMR) for such purposes.

The approaches herein improve on previous methods by allowing an initiating STA to request a responding STA to change the responding STA's operating mode/parameters, which allows AP/STAs to adjust their operating mode/parameters based on network conditions and requirements. The approaches herein may enhance WLAN performance, such as improved coexistence and reduced interference, in different scenarios such as multi-AP, multi-basic service set (BSS), peer to peer (P2P), etc.

In an embodiment, a method performed by a first device, includes transmitting, to a second device, an OMR indicating a requested operation mode change by the second device and an expected start time; receiving, from the second device, a response to the OMR; and transmitting or receiving data, to or from the second device, based on the response to the OMR.

In an embodiment, a first device includes a transceiver; and a processor configured to transmit, to a second device, an OMR indicating a requested operation mode change by the second device and an expected start time, receive, from the second device, a response to the OMR, and transmit or receive data, to or from the second device, based on the response to the OMR.

In an embodiment, a method performed by a second device includes receiving, from a first device, an OMR indicating a requested operation mode change by the second device and an expected start time; determining whether to accept or deny the requested operation mode change; transmitting, to the first device, a response to the OMR, based the determining; and transmitting or receiving data, to or from the first device, based on the response to the OMR.

In an embodiment, a second device includes a transceiver; and a processor configured to receive, from a first device, an OMR indicating a requested operation mode change by the second device and an expected start time, determine whether to accept or deny the requested operation mode change, transmit, to the first device, a response to the OMR, based the determining, and transmit or receive data, to or from the first device, based on the response to the OMR.

### BRIEF DESCRIPTION OF THE DRAWING

In the following section, the aspects of the subject matter disclosed herein will be described with reference to exemplary embodiments illustrated in the figures, in which:
FIG. 1 illustrates an example of a first device transmitting an OMN to a second device;
FIG. 2 illustrates an example OMR format, according to an embodiment;
FIG. 3A illustrates an example of a first device transmitting an OMR to a second device, according to an embodiment;
FIG. 3B illustrates an example of a first device transmitting an OMR to a second device, according to an embodiment;
FIG. 3C illustrates an example of a first device transmitting an OMR to a second device, according to an embodiment;
FIG. 4 is a flow chart illustrating a method performed by a first device, according to an embodiment;
FIG. 5 is a flow chart illustrating a method performed by a second device, according to an embodiment;
FIG. 6 is a block diagram of an electronic device in a network environment, according to an embodiment.
FIG. 7 shows a system including a STA and an AP in communication with each other.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

According to an embodiment of the disclosure, an initiating STA may request a responding STA to change the responding STA's operating mode. That is, the initiating STA may transmit an OMR to the responding STA, requesting the responding STA to change its operating mode. The operating mode may include BW, NSS, other settings/fields/elements, etc.

The initiating STA may have different reasons for transmitting the OMR. For example, the initiating STA may have or will have certain changes (e.g., operating mode, network conditions, or throughput, latency, and/or quality of service (QoS) requirements) and may request the responding STA to change its operating mode accordingly, e.g., for better throughput, latency, QoS, etc. An initiating STA may also want to make certain changes during network planning, testing, troubleshooting, or operating phases.

As the responding STA may have its own reasons (e.g., QoS requirements) to be running in a certain operating mode, the responding STA may accept or deny the OMR.

The OMR may include a number of use cases, such as:
AP to AP: an AP may request or recommend another AP to change its operating mode, e.g., to change BW (or primary channel selection) to reduce or avoid interference on primary or non-primary channels or for other coordination purposes.
Non-AP STA to AP: a non-AP STA may request or recommend an AP to change the AP's operating mode, e.g., to increase the AP's BW and/or NSS if the AP is operating in low BW/NSS (e.g., to save power or reduce interference).
AP to non-AP STA: an AP may request or recommend a non-AP STA to change the non-AP STA's operating BW and/or NSS, e.g., due to power saving, buffer status, or latency sensitive traffic.
Non-AP STA to non-AP STA: a non-AP STA may request another non-AP STA to change its operating mode, e.g., based on conditions and requirements of P2P and WLAN connections.

According to an embodiment, an OMR can be used as standalone or together with existing protocols such as OMI and/or OMN.

An OMR may have different request types, e.g., recommending a change or requiring a certain operating mode.

An OMR may include an indication for a request, e.g., a reason code, such as channel planning, coordinated spatial reuse, latency sensitive traffic, etc.

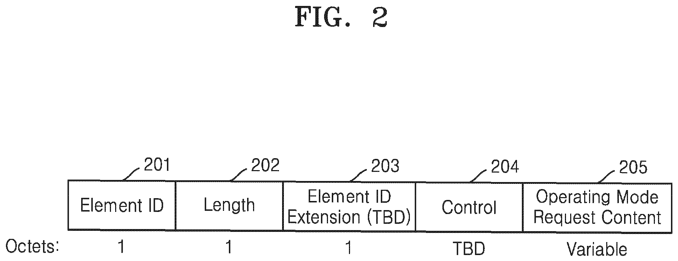

FIG. 2 illustrates an example OMR format, according to an embodiment.

Referring to FIG. 2, the OMR includes element ID field 201, a length field 202, an element ID extension field 203, a control field 204, and an OMR content field 205.

An OMR may be solicited or unsolicited, with or without a requirement of a response frame.

An ACK received by an initiating STA after the frame containing the OMR may confirm that the OMR was received by the responding STA.

A response to an OMR by a responding STA, i.e., an operating mode response, may indicate whether the responding STA accepts or denies the OMR.

An ACK and an operating mode response may have options for explicit and implicit indications. For example, an OMR is acknowledged, i.e., the initiating STA receives an ACK after transmitting the OMR, but the responding STA does not send an OMI, an OMN, or any other related response frames, then the initiating STA may understand that the responding STA has received and rejected the OMR. However, if the responding STA decides to accept the received OMR, it may send an OMI or initiate an OMN procedure (e.g., in case of an AP) with the requested updated operating mode (or other mechanisms such as notify channel width and high throughput (HT), very HT (VHT), high efficiency (HE), extremely high throughput (EHT), ultra high reliability (UHR), or future generation operation elements).

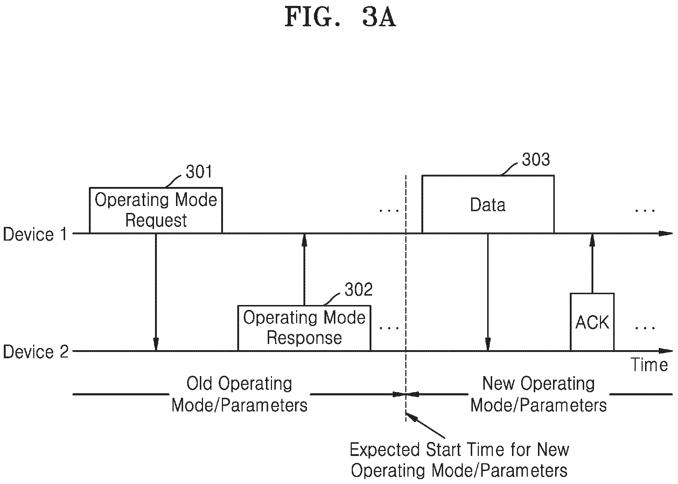

FIG. 3A illustrates an example of a first device transmitting an OMR to a second device, according to an embodiment.

Referring to FIG. 3A, at 301, Device 1 (e.g., an AP or a non-AP STA) transmits an OMR indicating a requested operation mode change by Device 2, e.g., a new operating mode/parameters, and an expected start time to Device 2 (e.g., an AP or a non-AP STA). For example, after identifying new QoS requirements, Device 1 may request Device 2 to change its operating mode accordingly.

After the OMR is received by Device 2, at 302, Device 2 sends an operating mode response to Device 1, confirming that the OMR is received and accepted. While the example in FIG. 3A illustrates Device 2 accepting the OMR, as described above, the present disclosure is not limited thereto. For example, if the requested change, i.e., the new operating mode/parameters, would not allow Device 2 to meet its own QoS requirements, Device 2 may deny the OMR.

At (or after) the expected start time for the new operating mode/parameters, at 303, Device 1 can start transmissions in accordance with the new operating mode/parameters. Although the example in FIG. 3A illustrates Device 1 transmitting data at 303, the present disclosure is not limited thereto. For example, after Device 2 sends the operating mode response to Device 1, confirming that the OMR is received and accepted, Device 2 may also transmit data in accordance with the new operating mode/parameters.

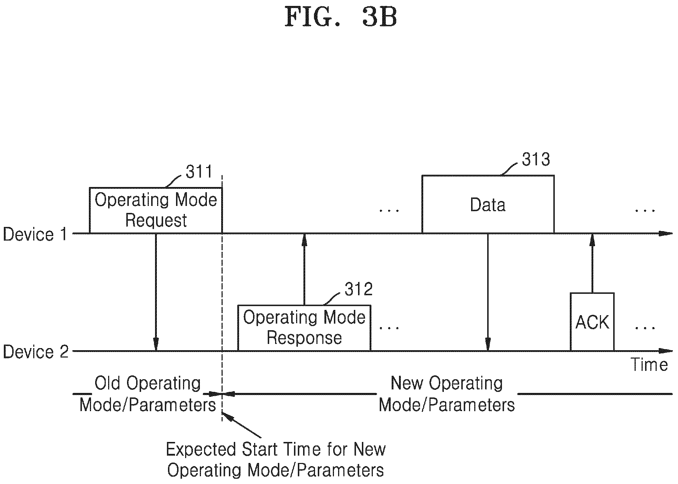

FIG. 3B illustrates an example of a first device transmitting an OMR to a second device, according to an embodiment. More specifical, the example in FIG. 3B is similar to the example in FIG. 3A, except that an expected start time for new operating mode/parameters is after an OMR, but before an operating mode response.

Referring to FIG. 3B, at 311, Device 1 (e.g., an AP or a non-AP STA) transmits an OMR indicating a new operating mode/parameters and an expected start time to Device 2 (e.g., an AP or a non-AP STA). More specifically, Device 1 sends the OMR to Device 2, requesting Device 2 to operate in the new operating mode/parameters immediately, meaning Device 2 will switch to the new operating mode/parameters for sending an operating mode response frame and other frames afterwards.

After the OMR is received by Device 2, at 312, since Device 2 accepts the request, Device 2 starts switching to the new operating mode/parameters according to the expected start time and then sends an operating mode response to Device 1 using the new operating mode/parameters, confirming that the OMR is received and accepted. Since the expected start time occurs before Device 2 can send an operating mode response, at 312, Device 2 sends the operating mode response to Device 1 in accordance with the new operating mode/parameters of Device 2 and Device 1. In this case, the operating mode response is interpreted by Device 1 as an ACK and an acceptance of the OMR.

The example illustrated in FIG. 3B assumes that Device 2 is able to switch to the new operating mode/parameters quickly, i.e., right after reception of OM Request, and/or Device 1 provides padding in the OMR so that Device 2 has enough time to switch to the new operating mode/parameters.

After the expected start time for the new operating mode/parameters and receiving the operating mode response, at 313, Device 1 can start transmissions using the new operating mode/parameters.

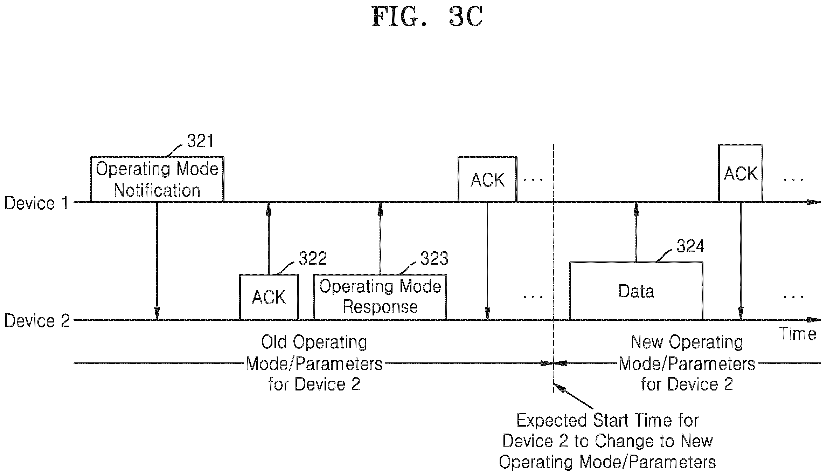

FIG. 3C illustrates an example of a first device transmitting an OMR to a second device, according to an embodiment.

Referring to FIG. 3C, at 321, Device 1 (e.g., an AP or a non-AP STA) transmits an OMR indicating a new operating mode/parameters and an expected start time to Device 2 (e.g., an AP or non-AP STA).

After the OMR is received by Device 2, at 322, Device 2 transmits an ACK to Device 1 to acknowledge that the OMR is received.

At 323, Device 2 transmits an operating mode response to Device 1 to indicate that the OMR is accepted. Although FIG. 3C illustrates an example in which the OMR is accepted, as Device 2 may have its own reasons to be running in a certain operating mode, at 323, it may transmit an operating mode response to Device 1 to indicate that the OMR is denied.

At (or after) the expected start time for new operating mode/parameters and receiving the operating mode response indicating that the OMR is accepted, Device 1 and Device 2 can start transmissions using the new operating mode/parameters. For example, in FIG. 3C, at 324, Device 2 transmits data to Device 1 in accordance with the new operating mode/parameters.

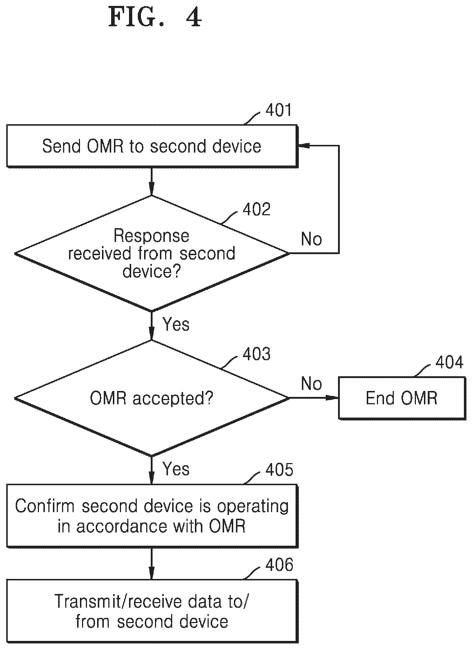

FIG. 4 is a flow chart illustrating a method performed by a first device, according to an embodiment.

Referring to FIG. 4, in step 401, the first device, e.g., an AP or a non-AP STA, transmits, to a second device, e.g., an AP or a non-AP STA, an OMR indicating a requested operation mode change by the second device and an expected start time.

In step 402, the first devices determines if a response to the OMR is received from the second device. If no response is received in step 402, the process may return to step 401 for the first device to re-transmits the OMR to the second device.

Although not illustrated in FIG. 4, if no response is received in step 402, the first devices may terminate the OMR process, e.g., immediately or after a predetermined number of retransmissions.

In response to receiving a response to the OMR from the OMR in step 402, the first devices determines the OMR has been accepted in step 403.

If the OMR has not been accepted in step 403, the first devices terminates the OMR process in step 404.

In response to the OMR being accepted in step 403, the first devices confirms that the second device is operating in accordance with the requested operation mode change, e.g., using new operating mode/parameters at an expected start time, in step 405.

In step 406, the first device transmits or receives data, to or from the second device, in accordance with the requested operation mode change, e.g., using new operating mode/parameters.

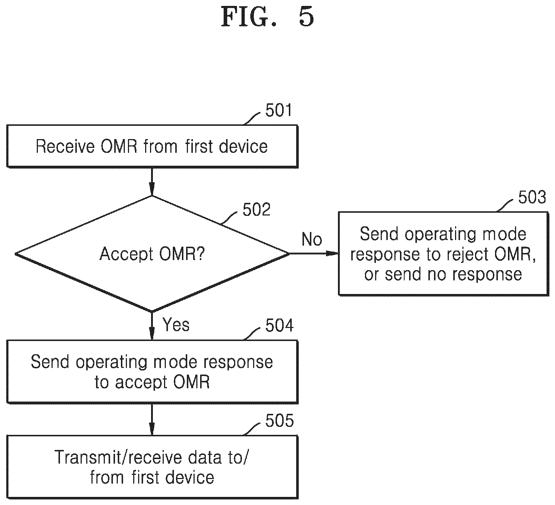

FIG. 5 is a flow chart illustrating a method performed by a second device, according to an embodiment.

Referring to FIG. 5, in step 501, the second device, e.g., an AP or a non-AP STA, receives, from a first device, e.g., an AP or a non-AP STA, an OMR indicating a requested operation mode change by the second device and an expected start time.

In step 502, the second device determines whether to accept or deny the requested operation mode change.

In response to rejecting the OMR in step 502, in step 503, the second device may send, to the first device, an operating mode response rejecting the OMR or send no response to the OMR, wherein the first device will interpret no response as a rejection.

In response to accepting the OMR in step 502, in step 504, the second device transmits, to the first device, an operating mode response accepting the OMR.

In step 505, the second device transmits or receives data, to or from the first device, in accordance with the requested operation mode change, e.g., using new operating mode/parameters.

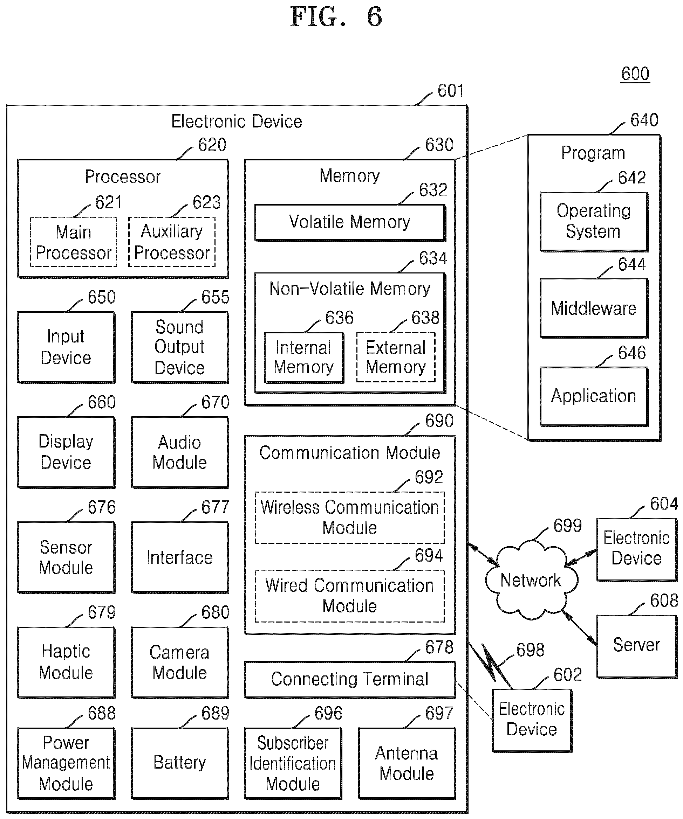

FIG. 6 is a block diagram of an electronic device in a network environment 600, according to an embodiment.

Referring to FIG. 6, an electronic device 601 in a network environment 600, e.g., Device 1 in FIG. 3A, 3B, or 3C, may communicate with an electronic device 602, e.g., Device 2 in FIG. 3A, 3B, or 3C, via a first network 698 (e.g., a short-range wireless communication network), or an electronic device 604 or a server 608 via a second network 699 (e.g., a long-range wireless communication network). The electronic device 601 may communicate with the electronic device 604 via the server 608. The electronic device 601 may include a processor 620, a memory 630, an input device 650, a sound output device 655, a display device 660, an audio module 670, a sensor module 676, an interface 677, a haptic module 679, a camera module 680, a power management module 688, a battery 689, a communication module 690, a subscriber identification module (SIM) card 696, or an antenna module 697. In one embodiment, at least one (e.g., the display device 660 or the camera module 680) of the components may be omitted from the electronic device 601, or one or more other components may be added to the electronic device 601. Some of the components may be implemented as a single integrated circuit (IC). For example, the sensor module 676 (e.g., a fingerprint sensor, an iris sensor, or an illuminance sensor) may be embedded in the display device 660 (e.g., a display).

The processor 620 may execute software (e.g., a program 640) to control at least one other component (e.g., a hardware or a software component) of the electronic device 601 coupled with the processor 620 and may perform various data processing or computations.

As at least part of the data processing or computations, the processor 620 may load a command or data received from another component (e.g., the sensor module 676 or the communication module 690) in volatile memory 632, process the command or the data stored in the volatile memory 632, and store resulting data in non-volatile memory 634. The processor 620 may include a main processor 621 (e.g., a central processing unit (CPU) or an application processor (AP)), and an auxiliary processor 623 (e.g., a graphics processing unit (GPU), an image signal processor (ISP), a sensor hub processor, or a communication processor (CP)) that is operable independently from, or in conjunction with, the main processor 621. Additionally or alternatively, the auxiliary processor 623 may be adapted to consume less power than the main processor 621, or execute a particular function. The auxiliary processor 623 may be implemented as being separate from, or a part of, the main processor 621.

The auxiliary processor 623 may control at least some of the functions or states related to at least one component (e.g., the display device 660, the sensor module 676, or the communication module 690) among the components of the electronic device 601, instead of the main processor 621 while the main processor 621 is in an inactive (e.g., sleep) state, or together with the main processor 621 while the main processor 621 is in an active state (e.g., executing an application). The auxiliary processor 623 (e.g., an image signal processor or a communication processor) may be implemented as part of another component (e.g., the camera module 680 or the communication module 690) functionally related to the auxiliary processor 623.

The memory 630 may store various data used by at least one component (e.g., the processor 620 or the sensor module 676) of the electronic device 601. The various data may include, for example, software (e.g., the program 640) and input data or output data for a command related thereto. The memory 630 may include the volatile memory 632 or the non-volatile memory 634. Non-volatile memory 634 may include internal memory 636 and/or external memory 638.

The program 640 may be stored in the memory 630 as software, and may include, for example, an operating system (OS) 642, middleware 644, or an application 646.

The input device 650 may receive a command or data to be used by another component (e.g., the processor 620) of the electronic device 601, from the outside (e.g., a user) of the electronic device 601. The input device 650 may include, for example, a microphone, a mouse, or a keyboard.

The sound output device 655 may output sound signals to the outside of the electronic device 601. The sound output device 655 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 660 may visually provide information to the outside (e.g., a user) of the electronic device 601. The display device 660 may include, for example, a display, a hologram device, or a projector and control circuitry to control a corresponding one of the display, hologram device, and projector. The display device 660 may include touch circuitry adapted to detect a touch, or sensor circuitry (e.g., a pressure sensor) adapted to measure the intensity of force incurred by the touch.

The audio module 670 may convert a sound into an electrical signal and vice versa. The audio module 670 may obtain the sound via the input device 650 or output the sound via the sound output device 655 or a headphone of an external electronic device 602 directly (e.g., wired) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. The sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device 602 directly (e.g., wired) or wirelessly. The interface 677 may include, for example, a high- definition multimedia interface (HDMI), a universal serial bus (USB) interface, a secure digital (SD) card interface, or an audio interface.

A connecting terminal 678 may include a connector via which the electronic device 601 may be physically connected with the external electronic device 602. The connecting terminal 678 may include, for example, an HDMI connector, a USB connector, an SD card connector, or an audio connector (e.g., a headphone connector).

The haptic module 679 may convert an electrical signal into a mechanical stimulus (e.g., a vibration or a movement) or an electrical stimulus which may be recognized by a user via tactile sensation or kinesthetic sensation. The haptic module 679 may include, for example, a motor, a piezoelectric element, or an electrical stimulator.

The camera module 680 may capture a still image or moving images. The camera module 680 may include one or more lenses, image sensors, image signal processors, or flashes. The power management module 688 may manage power supplied to the electronic device 601. The power management module 688 may be implemented as at least part of, for example, a power management integrated circuit (PMIC).

The battery 689 may supply power to at least one component of the electronic device 601. The battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the AP) and supports a direct (e.g., wired) communication or a wireless communication. The communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as BLUETOOTH^{™}, wireless-fidelity (Wi-Fi) direct, or a standard of the Infrared Data Association (IrDA)) or the second network 699 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 692 may identify and authenticate the electronic device 601 in a communication network, such as the first network 698 or the second network 699, using subscriber information (e.g., international mobile subscriber identity (IMSI)) stored in the subscriber identification module 696.

The antenna module 697 may transmit or receive a signal or power to or from the outside (e.g., the external electronic device) of the electronic device 601. The antenna module 697 may include one or more antennas, and, therefrom, at least one antenna appropriate for a communication scheme used in the communication network, such as the first network 698 or the second network 699, may be selected, for example, by the communication module 690 (e.g., the wireless communication module 692). The signal or the power may then be transmitted or received between the communication module 690 and the external electronic device via the selected at least one antenna.

Commands or data may be transmitted or received between the electronic device 601 and the external electronic device 604 via the server 608 coupled with the second network 699. Each of the electronic devices 602 and 604 may be a device of a same type as, or a different type, from the electronic device 601. All or some of operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 601. The electronic device 601 may provide the outcome, with or without further processing of the outcome, as at least part of a reply to the request. To that end, a cloud computing, distributed computing, or client-server computing technology may be used, for example.

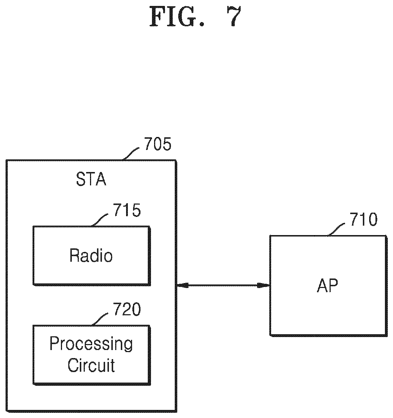

FIG. 7 shows a system including a STA 705 and an AP 710, in communication with each other. The STA 705 may include a radio 715 and a processing circuit (or a means for processing) 720, which may perform various methods disclosed herein, e.g., the method illustrated in FIG. 4 or 5. For example, the processing circuit 720 may receive, via the radio 715, transmissions from the network node (AP) 710, and the processing circuit 720 may transmit, via the radio 715, signals to the AP 710.

In accordance with the above-described embodiments, an initiating STA may request a responding STA to change the responding STA's operating mode and/or parameters, which allows AP and STAs adjust their operating modes and/or parameters based on network conditions and requirements, which can enhance WLAN performance, e.g., by improving coexistence and reducing interference, in different scenarios such as multi-AP, multi-BSS, and P2P.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method performed by a first device (601), the method comprising:
transmitting (301, 311, 321, 401), to a second device (602), an operating mode request, OMR, indicating a requested operation mode change by the second device (602) and an expected start time;
receiving (402), from the second device (602), a response to the OMR; and
transmitting (303, 313) or receiving (406) data, to or from the second device (602), based on the response to the OMR.

2. The method of any one of claims 1, wherein the response to the OMR indicates to the first device (601) that the second device (602) has received the OMR and whether or not the second device (602) has accepted the requested operation mode change.

3. The method of claim 2, wherein the response to the OMR is received by the first device (601) after the expected start time.

4. The method of claim 1, further comprising receiving, from the second device (602), an acknowledgement signal (ACK) indicating that the second device (602) has received the OMR.

5. The method of any one of claims 1 to 4, wherein the response to the OMR indicates that the second device (602) has accepted the requested operation mode change, and
wherein transmitting or receiving the data (406), to or from the second device (602), based on the response to the OMR comprises at least one of:
transmitting the data, to the second device (602), in accordance with the operation mode change by the second device (602), at or after the expected start time; or
receiving the data, from the second device (602), in accordance with the operation mode change by the second device (602), at or after the expected start time.

6. A method performed by a second device (602), the method comprising:
receiving (501), from a first device (601), an operating mode request, OMR, indicating a requested operation mode change by the second device (602) and an expected start time;
determining (502) whether to accept or deny the requested operation mode change;
transmitting (302, 312, 322, 323, 503, 504), to the first device (601), a response to the OMR, based the determining; and
transmitting or receiving (505) data, to or from the first device (601), based on the response to the OMR.

7. The method of claim 6, wherein the response to the OMR indicates to the first device (601) that the second device (602) has received the OMR and whether or not the second device (602) has accepted the requested operation mode change.

8. The method of claim 7, wherein the response to the OMR is transmitted after the expected start time.

9. The method of claim 6, further comprising transmitting, to the first device (601), an acknowledgement signal (ACK) indicating that the second device (602) has received the OMR.

10. The method of claim 4 or 9, wherein the response to the OMR indicates whether or not the second device has accepted the requested operation mode change.

11. The method of any one of claims 6 to 10, wherein the response to the OMR indicates that the second device (602) has accepted the requested operation mode change, and
wherein transmitting or receiving the data, to or from the first device (601), based on the response to the OMR comprises at least one of:
transmitting the data, to the first device (601), in accordance with the operation mode change by the second device (602), at or after the expected start time; or
receiving the data, from the first device (601), in accordance with the operation mode change by the second device (602), at or after the expected start time.

12. The method of any one of claims 1 to 11, wherein the first device includes a first access point, AP, or a first non-AP station, STA, and
wherein the second device includes a second AP or a second non-AP STA.

13. The method of any one of claims 1 to 12, wherein the requested operation mode change includes at least one of a new operation mode or parameter for operation.

14. The method of claim 13, wherein the at least one of the new operation mode or parameter for operation includes at least one of a bandwidth, BW, change, a change to a number of spatial streams, NSS, or a setting change.

15. A device, comprising:
a transceiver; and
a processor (620) configured to carry out the method according to any one of the preceding claims.
